# EUROPEAN PATENT APPLICATION

(11) **EP 3 305 687 A1**
(43) Date of publication of application: **11.04.2018**
(21) Application number: 16832695.7
(22) Date of filing: 11.07.2016
(51) Int. Cl.: B65D 81/20, A01K 1/015, B01J 20/28, B01J 20/30, B65B 31/02

(54) **EXCREMENT TREATING MATERIAL AND METHOD OF PRODUCING SAME**

(30) Priority: 03.08.2015 JP 2015153173
(71) Applicant: Daiki Co. Ltd., Tokyo 107-0052 (JP)
(72) Inventor: YOSHINAGA Junji, Tokyo 107-0052 (JP)
(74) Representative: Müller-Boré & Partner Patentanwälte PartG mbB
(86) International application number: PCT/JP2016/070395
(87) International publication number: WO 2017/022416

(57) **Abstract**

An excrement treatment material in which the surface layers of granules are less likely to be removed or damaged, and a method for manufacturing the excrement treatment material are provided. An excrement treatment material (1) is to be used for treatment of human or animal excrement. The excrement treatment material (1) includes a plurality of granules (10) and a packaging bag (20). The granules (10) are used for treatment of excrement. The plurality of granules (10) are placed in the packaging bag (20). The inside of the packaging bag (20) is in a vacuum state.

## Description

### Technical Field

The present invention relates to an excrement treatment material and a method for manufacturing the same.

### Background Art

An example of a conventional excrement treatment material is described in Patent Document 1. The excrement treatment material described in Patent Document 1 includes a plurality of granules for absorbing human or animal excrement. These granules are shipped in a state of being placed in one packaging bag all together.

### Citation List

### Patent Document

Patent Document 1: JP 2010-158253A

### Summary of Invention

### Technical Problem

Placing the plurality of granules in a packaging bag in this manner contributes to the convenience of transport, storage, and the like of the excrement treatment material. However, conventional excrement treatment materials have a problem in that the surface layers of the granules are removed or damaged during transportation or the like due to rubbing between the granules or rubbing between the granules and the packaging bag. Such removal or the like not only deteriorates the quality of the excrement treatment material, but also causes dust to disperse when the packaging bag is opened to use the excrement treatment material.

The present invention was achieved in view of the aforementioned problems, and it is an object thereof to provide an excrement treatment material in which the surface layers of granules are less likely to be removed or damaged, and a method for manufacturing the excrement treatment material.

### Solution to Problem

An excrement treatment material according to the present invention includes a plurality of granules for treating excrement, and a packaging bag in which the plurality of granules are placed, wherein an inside of the packaging bag is in a vacuum state.

In this excrement treatment material, the inside of the packaging bag in which the plurality of granules have been placed is in a vacuum state. "Vacuum state" as used herein refers to a state in which the pressure is lower than the atmospheric pressure. Achieving a vacuum state in this manner reduces excess space in which the granules can move in the packaging bag. This makes it difficult for the granules to move inside the packaging bag, and therefore, rubbing between the granules and rubbing between the granules and the packaging bag are suppressed.

A method for manufacturing an excrement treatment material according to the present invention includes a granule formation step of forming a plurality of granules for treating excrement, a granule placement step of placing the plurality of granules formed in the granule formation step in a packaging bag, and a vacuum treatment step of bringing an inside of the packaging bag in which the plurality of granules are placed in the granule placement step into a vacuum state.

In this manufacturing method, the inside of the packaging bag in which the plurality of granules have been placed is brought into a vacuum state. Achieving a vacuum state in this manner reduces excess space in which the granules can move in the packaging bag. This makes it difficult for the granules to move inside the packaging bag in the manufactured excrement treatment material, and therefore, rubbing between the granules and rubbing between the granules and the packaging bag are suppressed.

### Advantageous Effects of Invention

With the present invention, an excrement treatment material in which the surface layers of granules are less likely to be removed or damaged, and a method for manufacturing the excrement treatment material can be realized.

### Brief Description of Drawings

FIG. 1 is a plan view showing an embodiment of an excrement treatment material according to the present invention.
FIG. 2 is a schematic diagram showing a granule 10.
FIG. 3 is a diagram for illustrating a state of the cross section along line III-III in FIG. 1.
FIG. 4 is a diagram for illustrating a state near the interface between granules 10 and a packaging bag 20.

### Description of Embodiments

Hereinafter, embodiments of the present invention will be described in detail with reference to the drawings. It should be noted that, in the description of the drawings, identical elements are denoted by the identical reference numerals, and redundant descriptions are omitted.

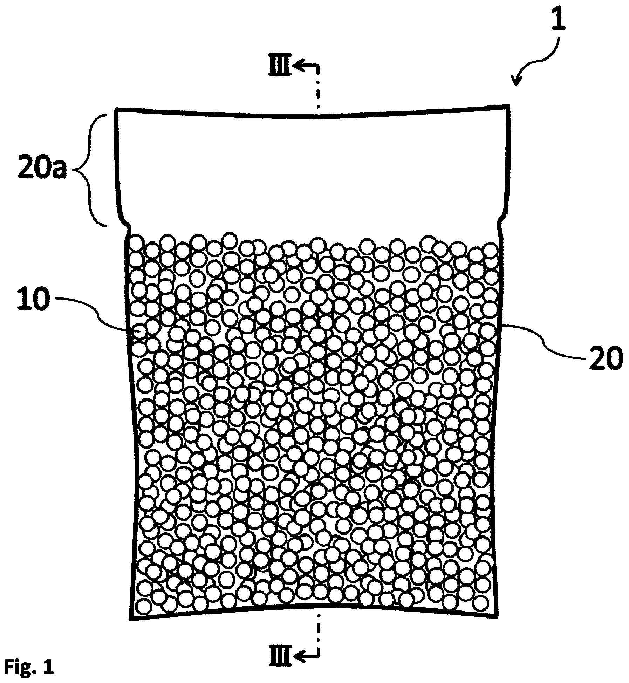

FIG. 1 is a plan view showing an embodiment of the excrement treatment material according to the present invention. An excrement treatment material 1 is to be used for the treatment of human or animal excrement. The excrement treatment material 1 includes a plurality of granules 10 and a packaging bag 20. The granules 10 are used for the treatment of excrement. In this embodiment, the granules 10 absorb excrement and thus treat the excrement.

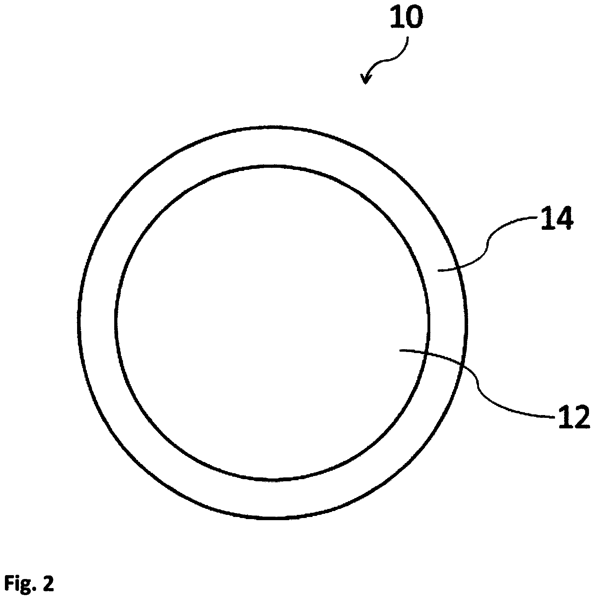

FIG. 2 is a schematic diagram showing the granule 10. Each of the granules 10 includes a core portion 12 and a coating portion 14. The core portion 12 is shaped into a granular shape. Examples of such a granular shape include a sphere, a circular cylinder, and an ellipsoid. The core portion 12 has a function of absorbing and retaining water from excrement. For example, papers, used tea leaves, plastics, or bean curd lees can be used as a material of the core portion 12. It is preferable to use these materials as the main material of the core portion 12. "Main material of the core portion 12" as used herein refers to a material that is contained in the core portion 12 at the largest weight ratio, out of materials constituting the core portion 12.

"Papers" refer to materials containing pulp as the main component. Examples of papers include classified products of wallpaper made of polyvinyl chloride (papers obtained by classifying wallpaper made of polyvinyl chloride), fluff pulp, paper making sludge, and pulp sludge, in addition to ordinary paper. Classified products of a paper diaper (plastics obtained by classifying a paper diaper) may be used as the plastics, for example. It is preferable that dried bean curd lees are used as the bean curd lees.

The coating portion 14 covers the core portion 12. The coating portion 14 may cover the entire surface of the core portion 12 or only a portion of the surface of the core portion 12. This coating portion 14 has a function of causing the granules 10, which have absorbed excrement, to adhere to one another and form an aggregate when used. For example, papers, used tea leaves, plastics, or bean curd lees can also be used as a material of the coating portion 14. It is preferable to use these materials as the main material of the coating portion 14.

The coating portion 14 contains an adhesive material. For example, starch, CMC (carboxymethyl cellulose), PVA (polyvinyl alcohol), dextrin, or a water-absorbing polymer can be used as the adhesive material. It is preferable that the water-absorbing polymer has an average particle diameter of 20 µm or less. "Average particle diameter" as used herein refers to the smallest mesh opening through which 50 wt% or more of particles can pass when a water-absorbing polymer, which is a grouping of a large number of particles, is put through a sieve. Accordingly, "having an average particle diameter of 20 pm or less" means that, when a water-absorbing polymer is put through a sieve with 20-pm mesh openings, 50 wt% or more of the particles can pass therethrough.

Referring back to FIG. 1, the plurality of granules 10 are placed in the packaging bag 20. The inside of the packaging bag 20 is in a vacuum state. It is preferable that the inside of the packaging bag 20 is in a low vacuum state. In this embodiment, the packaging bag 20 is constituted by two sheets whose peripheral edge portions are bonded together. The packaging bag 20 is sealed by bonding the peripheral edge portions in this manner. This packaging bag 20 is flexible. Plastic such as polyethylene can be used as a material of the packaging bag 20, for example.

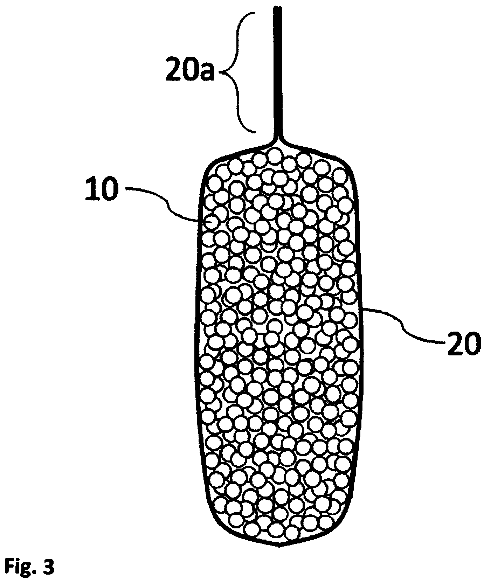

The plurality of granules 10 are placed in the packaging bag 20 such that a portion 20a of the packaging bag 20 containing no granules 10 remains. In this embodiment, the portion 20a is provided near the upper end of the packaging bag 20. As shown in FIG. 3, the inner surfaces of the packaging bag 20 (those of the above-mentioned two sheets) at the portion 20a are in intimate contact with each other. FIG. 3 shows a state of the cross section along line III-III in FIG. 1. However, the inner surfaces of the packaging bag 20 at the portion 20a are not adhered to each other. Specifically, the inner surfaces of the packaging bag 20 at the portion 20a are in intimate contact with each other due to the inside of the packaging bag 20 being in a vacuum state, and therefore, after the packaging bag 20 is opened, the inner surfaces of the packaging bag 20 at the portion 20a are not in intimate contact with each other.

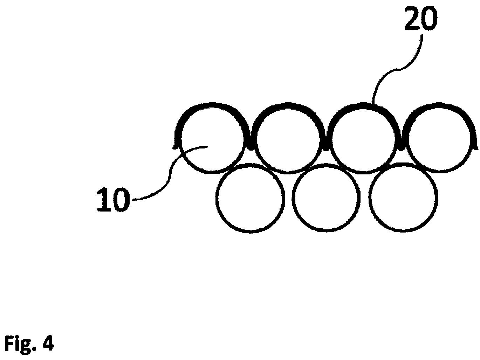

As shown in FIG. 4, the packaging bag 20 is in intimate contact with the plurality of granules 10. This intimate contact therebetween is also due to the inside of the packaging bag 20 being in a vacuum state, and therefore, after the packaging bag 20 is opened, the packaging bag 20 and the granules 10 are not in intimate contact with each other. The packaging bag 20 has recesses and protrusions corresponding to the surface shape of the grouping of the plurality of granules 10. Furthermore, the packaging bag 20 enters gaps between the plurality of granules 10.

Next, an example of a method for manufacturing the excrement treatment material 1 will be described as an embodiment of a method for manufacturing an excrement treatment material according to the present invention. This manufacturing method includes a granule formation step, a granule placement step, and a vacuum treatment step.

The granule formation step is a step of forming the plurality of granules 10. In this step, materials constituting the core portion 12 (core portion materials) are pulverized with a crusher to have a predetermined size. Then, the pulverized materials are placed and mixed in a mixer with predetermined proportions. After water is added as necessary, the core portion materials are subjected to extrusion granulation using a granulator. As a result, a plurality of core portions 12 shaped into a granular shape are obtained (core portion formation step).

Next, the coating portions 14 are formed to cover each of the core portions 12 (coating portion formation step). Specifically, the coating portions 14 are formed by using a coating apparatus or the like to stick the materials constituting the coating portion 14 (coating materials) around the core portions 12. The coating materials can be stuck through sprinkling or spraying, for example. After this, the thus obtained granules are put through a sieve with mesh openings having a predetermined size, thus extracting only granules satisfying a predetermined standard. Then, the extracted granules are dried using a dryer. As a result, a plurality of granules 10 are formed.

The granule placement step is a step of placing the plurality of granules 10, which have been formed in the granule formation step, in the packaging bag 20. In this step, a filling machine or the like is used to place a predetermined amount (e.g., seven liters) of the granules 10 in the packaging bag 20 whose upper end is open. However, the plurality of granules 10 are placed in the packaging bag 20 such that the portion 20a of the packaging bag 20 containing no granules 10 remains.

The vacuum treatment step is a step of bringing the inside of the packaging bag 20 in which the plurality of granules 10 have been placed in the granule placement step into a vacuum state. For example, the inside of the packaging bag 20 is brought into a vacuum state by using an aspiration nozzle or the like to aspirate air in the packaging bag 20. At this time, it is preferable to bring the inside of the packaging bag 20 into a low vacuum state. In this embodiment, the inside of the packaging bag 20 is brought into a vacuum state such that the packaging bag 20 is in intimate contact with the plurality of granules 10 and the inner surfaces of the packaging bag 20 at the above-mentioned portion 20a are in intimate contact with each other. In addition, the inside of the packaging bag 20 is brought into a vacuum state such that recesses and protrusions corresponding to the surface shape of the grouping of the plurality of granules 10 are formed on the packaging bag 20. Furthermore, the inside of the packaging bag 20 is brought into a vacuum state such that the packaging bag 20 enters gaps between the plurality of granules 10. After this, the packaging bag 20 is sealed by closing the upper end of the packaging bag 20 such that the vacuum state is maintained. As a result, the excrement treatment material 1 is obtained.

The effects of this embodiment will be described. In this embodiment, the inside of the packaging bag 20 in which the plurality of granules 10 have been placed is brought into a vacuum state. Achieving a vacuum state in this manner reduces excess space in which the granules 10 can move in the packaging bag 20. This makes it difficult for the granules 10 to move in the packaging bag 20 in the manufactured excrement treatment material 1, and therefore, rubbing between the granules 10 and rubbing between the granules 10 and the packaging bag 20 are suppressed. Therefore, the excrement treatment material 1 in which the surface layers of granules 10 are less likely to be removed or damaged, and a method for manufacturing the excrement treatment material 1 are realized.

The packaging bag 20 is in intimate contact with the plurality of granules 10. This prevents the granules 10 from moving inside the packaging bag 20, and therefore, rubbing between the granules 10 and rubbing between the granules 10 and the packaging bag 20 are further suppressed.

The packaging bag 20 has recesses and protrusions corresponding to the surface shape of the grouping of the plurality of granules 10. The packaging bag 20 and the plurality of granules 10 are brought into intimate contact firmly in this manner, thus making it possible to effectively prevent the granules 10 from moving inside the packaging bag 20.

The packaging bag 20 enters gaps between the plurality of granules 10. The packaging bag 20 and the plurality of granules 10 are brought into intimate contact more firmly in this manner, thus making it possible to more effectively prevent the granules 10 from moving inside the packaging bag 20.

The inner surfaces of the packaging bag 20 at the portion 20a containing no granules 10 are in intimate contact. This further reduces the excess space in which the granules 10 can move, thus making it more difficult for the granules 10 to move inside the packaging bag 20.

When the inside of the packaging bag 20 is in a low vacuum state, the pressure inside the packaging bag 20 is not excessively lowered, thus making it possible to prevent the granules 10 from collapsing.

Each of the granules 10 includes the core portion 12 and the coating portion 14. Conventional granules that each includes a coating portion covering a core portion in this manner have a problem in that the surface layers, that is, the coating portions, are particularly likely to be removed or damaged. In this regard, with this embodiment, rubbing between the granules 10 and rubbing between the granules 10 and the packaging bag 20 are suppressed as described above, thus making it less likely that the coating portions 14 will be removed or the like.

The present invention is not limited to the above-described embodiment, and various modifications can be made. In the above-described embodiment, the example is shown in which each of the granules 10 has a multilayer structure including the core portion 12 and the coating portion 14. However, the coating portion 14 is not necessarily provided. That is, the granules 10 may have a single-layer structure including only the core portion 12. In this case, it is preferable that the core portion 12 contains an adhesive material.

In the above-described embodiment, the water-absorbing granules 10, which absorb excrement and thus treat the excrement, are shown as the example. However, the granules 10 may also be water-permeable granules that are permeable to excrement and thus treat the excrement. There are two types of water-permeable granules: one is granules whose inside is permeable to excrement, and the other is granules configured such that excrement passes through gaps between the granules. An example of the latter is a water-repellent granule.

### List of Reference Numerals

- 1: Excrement treatment material
- 10: Granule
- 12: Core portion
- 14: Coating portion
- 20: Packaging bag

## Claims

1. An excrement treatment material comprising:
a plurality of granules for treating excrement; and
a packaging bag in which the plurality of granules are placed,
wherein an inside of the packaging bag is in a vacuum state.

2. The excrement treatment material according to claim 1,
wherein the packaging bag is in intimate contact with the plurality of granules.

3. The excrement treatment material according to claim 1 or 2,
wherein the packaging bag has recesses and protrusions corresponding to a surface shape of a grouping of the plurality of granules.

4. The excrement treatment material according to any one of claims 1 to 3,
wherein the packaging bag enters gaps between the plurality of granules.

5. The excrement treatment material according to any one of claims 1 to 4,
the plurality of granules are placed in the packaging bag to leave a portion of the packaging bag containing no granules, and
inner surfaces of the packaging bag at the portion are in intimate contact with each other.

6. The excrement treatment material according to any one of claims 1 to 5,
wherein the inside of the packaging bag is in a low vacuum state.

7. The excrement treatment material according to any one of claims 1 to 6,
wherein each of the granules includes a core portion shaped into a granular shape, and a coating portion covering the core portion.

8. A method for manufacturing an excrement treatment material, comprising:
a granule formation step of forming a plurality of granules for treating excrement;
a granule placement step of placing the plurality of granules formed in the granule formation step in a packaging bag; and
a vacuum treatment step of bringing an inside of the packaging bag in which the plurality of granules are placed in the granule placement step into a vacuum state.

9. The method for manufacturing an excrement treatment material according to claim 8,
wherein, in the vacuum treatment step, the inside of the packaging bag is brought into the vacuum state to bring the packaging bag into intimate contact with the plurality of granules.

10. The method for manufacturing an excrement treatment material according to claim 8 or 9,
wherein, in the vacuum treatment step, the inside of the packaging bag is brought into the vacuum state to form, on the packaging bag, recesses and protrusions corresponding to a surface shape of a grouping of the plurality of granules.

11. The method for manufacturing an excrement treatment material according to any one of claims 8 to 10,
wherein, in the vacuum treatment step, the inside of the packaging bag is brought into the vacuum state to allow the packaging bag to enter gaps between the plurality of granules.

12. The method for manufacturing an excrement treatment material according to any one of claims 8 to 11,
wherein, in the granule placement step, the plurality of granules are placed in the packaging bag to leave a portion of the packaging bag containing no granules, and
in the vacuum treatment step, the inside of the packaging bag is brought into the vacuum state to bring inner surfaces of the packaging bag at the portion into intimate contact.

13. The method for manufacturing an excrement treatment material according to any one of claims 8 to 12,
wherein, in the vacuum treatment step, the inside of the packaging bag is brought into the vacuum state by aspirating air in the packaging bag.

14. The method for manufacturing an excrement treatment material according to any one of claims 8 to 13,
wherein, in the vacuum treatment step, the inside of the packaging bag is brought into a low vacuum state.

15. The method for manufacturing an excrement treatment material according to any one of claims 8 to 14,
wherein the granule formation step comprises:
a core portion formation step of forming a plurality of core portions shaped into a granular shape; and
a coating portion formation step of forming coating portions to cover each of the core portions formed in the core portion formation step.
